# EUROPEAN PATENT SPECIFICATION

(11) **EP 1 086 626 B1**
(45) Date of publication and mention of the grant of the patent: **31.03.2004**
(21) Application number: 00118200.5
(22) Date of filing: 31.08.2000
(51) Int. Cl.: A23L 1/16, A23L 1/162

(54) **Alimentary paste which rolls up on rehydration**
Lebensmittelmasse, welche beim Rehydratisieren aufrollt
Pâte alimentaire qui s'enroule au cours de la rehydratation

(30) Priority: 03.09.1999 DE 19942106
(43) Date of publication of application: 28.03.2001
(73) Proprietor: Bestfoods, Englewood Cliffs, New Jersey 07632-9976 (US); Bestfoods Deutschland GmbH & Co. OHG, 74074 Heilbronn (DE)
(72) Inventor: Sailer, Winfried, 74196 Neuenstadt (DE)
(74) Representative: Wurfbain, Gilles L.

(56) References cited:
- US-A- 5 534 273
- PATENT ABSTRACTS OF JAPAN vol. 1995, no. 01, 28 February 1995 (1995-02-28) & JP 06 292528 A (NISSIN FOOD PROD CO LTD), 21 October 1994 (1994-10-21)
- DATABASE WPI Section Ch, Week 198926 Derwent Publications Ltd., London, GB; Class D11, AN 1989-189391 XP002158364 & JP 01 128755 A (HAYASHI K), 22 May 1989 (1989-05-22)

## Description

The invention relates to a dried alimentary paste which rolls up on rehydration, in particular during the conventional boiling for rehydration.

In the preferred embodiment, the alimentary paste consists of two dough sheets, preferably noodle dough sheets, of differing composition.

The different behaviour on rehydration can be controlled via various parameters, for example via the protein content (addition of egg protein), via the content of hydrocolloids (e.g. guar gum) and/or via starch contents differing in type or amount and/or via a differing content of plant fibres, preferably wheat fibres and potato fibres. One possibility would be to add wheat gluten to the various dough sheets in different quantities and/or different qualities e.g. in that the properties of the gluten have been influenced by known means.

JP 55-23907-A discloses the production of rolled Japanese crackers, wherein α-starch, or flour containing α-starch, is spread in strips on to a sheet of rice-cake dough, or strips of α-starch-containing rice-cake dough are laid on a sheet of rice-cake dough and then water is sprayed on for gelatinization. The sheet is then dried and toasted, during which the sheet rolls to the shape of Japanese crackers. The rolling is dependent on the width of the strips and the spacing between the strips. Here a dried product is produced which is consumed in the dry state without prior rehydration and where a shape change takes place during the drying process as with many other drying processes.

US-4247567 likewise discloses a process for producing curved Japanese rice-crackers, wherein a single-layer sheet of rice-cake dough having differing water contents on the top and bottom sides is heated to different temperatures on the top and bottom sides, rolling taking place.

US 5534273 discloses wet-type instant noodles of double-layered structure, to provide a simple alternative to a three-ply structure. It is reported that such (i.e. two layers) structure gives excellent smoothness, tenacity and softness, with improved elasticity and firmness. The two layers have different composition.

The abstract of JP 05078217 discloses composite noodles by forming noodle strings from dough having two layers: one with nearly neutral or alkaline pH, another with (next to conventional ingredients) alginic acid or alginic acid salt and an alkaline agent. Said noodles are reported to provide properties (e.g. toughness, smoothness) of instant noodles comparable to fresh noodles.

The Derwent abstract of JP 1128755 disloses noodles made of three layers: a hard central layer and softer outer layers. The advantage is that such noodles are resistant to sogginess.

US 5738896 discloses spiral-shaped, dried pasta products, in which the conjoint use of dough conditioning agent and dusting agent achieves a coiling and separation of the spirals to form long pasta strands which do not stick to one another. The initial spiral-shaped rolling is achieved by conventional rollers.

JP 61-70951-A discloses a hand-shaped noodle consisting of two differing dough layers for improving the physical properties.

FR 2737840 A discloses the production of a biscuit consisting of at least two dough layers.

US 5 780 091 discloses a spiral-shaped, dried pasta which employs selected dusting agents and solid sauce interleaved within the spiral to insure unrolling of the spiral upon subsequent boiling. The sauce assists in enabling the spirals to unroll without sticking. Likewise the dusting agents are employed to insure that the pasta spirals unroll upon cooking, however, there is no suggestion that in case a sandwich sheet of two layers is employed for the pasta, the sheets should have differing properties resp. compositions.

JP 11-56278 A discloses a method by which multi-layered noodles are prepared by interposing transglutaminase fine particles between outer and inner layers producing an elongation of the noodles upon cooking.

JP 59-113861 A describes dried, multi-layered noodles which by integrating and pressing plural pastry webs in the preparation stage separate into individual layers upon boiling.

In contrast to said prior art, the present invention is concerned with alimentary pastes such as noodles which are generally termed pasta products, are traded and stored in the dried state and are rehydrated, for example by boiling in water, prior to consumption and which consist of at least two joined dough sheets of different quality so that they roll up on rehydration.

The flat, piece-form, for example square or strip-shaped, dried alimentary pastes are intended to roll up to a greater or lesser extent during rehydration to achieve a more attractive appearance, and/or not to stick to one another during manufacture and/or to affect the mouth feel and/or to incorporate a filler agent, for example by surrounding the alimentary pastes with a filler agent during the rolling operation.

The two doughs are rolled up separately and are then combined, for example rolled together, to form a bilayer sheet, which finally is sliced to form the desired geometric shapes, for example rectangles, triangles etc. It is important that the layered sheets do not separate during the subsequent operations.

In addition, it is possible to achieve an orientation of the dough via the rolling direction and/or an orientation of the fibres in the sheet. If squares of such a dough sheet are stamped out so that the edges of the squares are parallel to or at a right angle to the orientation of the dough, the alimentary paste rolls up via the edges during boiling. If the diagonals of the square, in contrast, are in parallel to or at a right angle to the orientation of the dough, the alimentary paste rolls up via the corners during boiling.

The thickness of the dough sheets influences the rolling capacity. The thicker the alimentary paste, the worse it rolls up. A maximum wall thickness of 3, preferably 1.5, mm has proved expedient; if the alimentary pastes are too thin the stability is lost, so that wall thicknesses below 0.5 mm are generally not sought-after. The optimum wall thickness is 0.6 - 1.2 mm.

Filled alimentary pastes can also be produced in this manner. For this purpose, either the filling can be applied to the alimentary paste prior to the rolling, the alimentary paste then rolling around the filling and incorporating this, or the rolling is performed while the alimentary paste is surrounded by the filling, the same effect being achieved.

Owing to the differing rehydration behaviour of the joined dough sheets, according to the invention a type of biometallic effect is achieved.

A typical egg dough is produced from fresh egg (whole egg) and wheat flour. To produce this dough, in a known manner, the eggs are beaten and mixed homogeneously with a flour, for example wheat flour. Thereafter the dough is shaped by the customary noodle dough technology, for example by kneading, pressing, laminating or by extrusion.

A typical fibre-containing dough is produced from water, flour and wheat fibres, usually the fibres first being mixed with the flour, for example likewise wheat flour, and then the make-up water being added and the dough being kneaded as during the production of the egg dough.

The two doughs are first rolled out separately. In the course of this, generally, 3-7 reduction steps are carried out until the dough has a wall thickness of 0.8-3 mm. Thereafter, the lamination takes place, by the two different doughs being combined and being rolled out via a further 1-3 reduction steps to the final thickness of generally 0.6-1.5 mm. The lamination can be carried out by a conventional noodle machine.

The resultant bilayer pasta is then stamped out or sliced and dried under customary conditions.

Suitable quantities can be taken from the formula examples below:

### Example 1:

| Raw material | Egg dough (g) | Fibre-containing dough (g) |
|---|---|---|
| Whole egg (fresh or pasteurized) | 2000 | |
| Water | | 1750 |
| Flour type 405 | 5000 | 5000 |
| Wheat fibres | | 300 |

### Example 2:

| Raw material | Egg dough (g) | Gum dough (g) |
|---|---|---|
| Whole egg (fresh or pasteurized) | 2000 | |
| Water | | 1750 |
| Flour type 405 | 5000 | 4900 |
| Guar gum | - | 100 |

### Example 3:

| Raw material | Starch dough (g) | Fibre-containing dough (g) |
|---|---|---|
| Native potato starch | 500 | |
| Water | 1700 | 1750 |
| Flour type 405 | 4500 | 5000 |
| Wheat fibres | | 300 |

### Example 4:

To produce the egg dough as described in Example 1, the flour is mixed with the homogenized eggs in a paddle mixer (20 min), and the dough is then kneaded to form a dough sheet.
To produce the fibre-containing dough as described in Example 1, the fibres are mixed with the flour, the make-up water (20°C) is added and the dough is mixed and kneaded as with the egg dough.

The two doughs are rolled out separately and reduced to a wall thickness of 1.5 mm, by means of 6 reduction steps.

Thereafter the two doughs are combined and rolled out via two further reduction steps to a thickness of 1.2 mm.

From the bilayer pasta thus produced, squares having an edge length of 4 cm are stamped out with the edges parallel to the direction of rolling out of the dough.

The squares are dried in a convection dryer for 16 hours at 50°C and 75-78% relative humidity.

During the rehydration, the previously flat squares roll up via an edge in a spiral shape.

## Claims

1. Process for producing an alimentary paste which rolls up on rehydration, **characterised in that** at least two dough sheets which exhibit different cooking behaviour are rolled together and the layered sheet thus formed is sliced to form the desired geometric shapes.

2. Process according to claim 1, wherein the dough sheets are of differing composition, owing to a different content of protein and/or hydrocolloids and/or gluten and/or starch and/or plant fibres and/or are of different quality owing to differing thickness and/or through different rolling out.

3. Process according to claim 1-2, wherein one dough sheet consist of an egg dough and the other sheet consists of a water dough having a content of plant fibres.

4. Process according to claim 1-3, wherein to the two dough sheets a different orientation has been given by the rolling out and/or a content of structural plant fibres, which two dough sheets are rolled out, the two dough sheets are placed one on the other in a parallel orientation and are rolled together and the bilayer sheet thus formed is sliced to form the desired geometric shapes.

## Patentansprüche

1. Verfahren zur Herstellung einer Lebensmittelmasse, welche bei der Rehydratisierung aufrollt, **dadurch gekennzeichnet, dass** mindestens zwei Teigschichten, welche unterschiedliche Kocheigenschaften aufweisen, zusammen gerollt werden und die so gebildete mehrlagige Schicht geschnitten wird, um die gewünschten geometrischen Formen zu bilden.

2. Verfahren gemäß Anspruch 1, worin die Teigschichten von unterschiedlicher Zusammensetzung sind, begründet in einem unterschiedlichen Gehalt an Protein und/oder Hydrokolloiden und/oder Gluten und/oder Stärke und/oder Pflanzenfasern und/oder von unterschiedlicher Qualität sind, aufgrund der unterschiedlichen Dicke und/oder durch unterschiedliches Ausrollen.

3. Verfahren gemäß Anspruch 1-2, worin eine Teigschicht aus einem Eierteig und die andere Schicht aus einem Wasserteig besteht, welcher einen Gehalt an Pflanzenfasern besitzt.

4. Verfahren gemäß Anspruch 1-3, worin den zwei Teigschichten eine unterschiedliche Orientierung durch das Ausrollen und/oder einem Gehalt an strukturellen Pflanzenfasern gegeben wurde, diese zwei Teigschichten ausgerollt werden, die zwei Teigschichten in einer parallelen Orientierung aufeinander gelegt und zusammen gerollt werden und die zweilagige Schicht, die so gebildet wurde, geschnitten wird, um die gewünschten geometrischen Formen zu bilden.

## Revendications

1. Procédé de production d'une pâte alimentaire qui s'enroule au cours de la réhydratation, **caractérisé en ce qu'**au moins deux feuilles de pâte qui font preuve d'un comportement de cuisson différent sont roulées ensemble et **en ce que** la feuille en couches ainsi formée est coupée afin d'avoir les formes géométriques souhaitées.

2. Procédé selon la revendication 1, dans lequel les feuilles de pâte ont une composition différente du fait d'une teneur différente en protéines et/ou en hydrocolloïdes et/ou en amidon et/ou en gluten et/ou en fibres végétales et/ou sont de qualité différente du fait d'une différence d'épaisseur et/ou du fait d'un enroulement différent.

3. Procédé selon les revendications 1 - 2, dans lequel l'une des feuilles de pâte est composée d'une pâte à l'oeuf et l'autre feuille est constituée d'une pâte à l'eau contenant des fibres végétales.

4. Procédé selon les revendications 1 - 3, dans lequel les deux feuilles de pâte ont une orientation différente qui leur a été donnée par l'enroulement et/ou par la teneur en des fibres végétales structurelles, lesdites deux feuilles de pâtes étant enroulées, les deux feuilles de pâte étant placées l'une sur l'autre dans une orientation parallèle et sont enroulées ensemble et la feuille à deux couches ainsi formée est découpée afin de former les formes géométriques souhaitées.
